# EUROPÄISCHE PATENTSCHRIFT

(11) **EP 1 789 281 B1**
(45) Veröffentlichungstag und Bekanntmachung des Hinweises auf die Patenterteilung: **23.07.2008**
(21) Anmeldenummer: 05784177.7
(22) Anmeldetag: 18.08.2005
(51) Int. Cl.: B60N 2/44, B60N 2/02

(54) **KRAFTFAHRZEUGSITZ MIT VERSTELLBAREN SEITENWANGEN**
MOTOR VEHICLE SEAT COMPRISING ADJUSTABLE LATERAL CHEEKS
SIEGE DE VEHICULE A PARTIES LATERALES REGLABLES

(30) Priorität: 30.08.2004 DE 202004013668 U
(43) Veröffentlichungstag der Anmeldung: 30.05.2007
(73) Patentinhaber: Brose Fahrzeugteile GmbH & Co. KG, Coburg, 96450 Coburg (DE)
(72) Erfinder: MACHT, Alwin, 96250 Ebensfeld (DE); PRAUSE, Andreas, 96450 Coburg (DE)
(74) Vertreter: Ninnemann, Detlef
(86) Internationale Anmeldenummer: PCT/DE2005/001476
(87) Internationale Veröffentlichungsnummer: WO 2006/024268

(56) Entgegenhaltungen:
- DE-A1- 3 129 525
- DE-A1- 3 718 528
- DE-A1- 10 057 449
- DE-A1- 19 605 779
- DE-A1- 19 750 116
- US-A- 5 328 236

## Beschreibung

Die Erfindung bezieht sich auf einen Kraftfahrzeugsitz mit verstellbaren Seitenwangen am Sitzteil und/oder an der Rückenlehne. Ein solcher Kraftfahrzeugsitz ist aus der gattungsgemäßen US 5 328 236 bekannt.

Anatomisch geformte Kraftfahrzeugsitze weisen zu beiden Seiten einer mittleren Sitz- oder Lehnenpolsterfläche Erhebungen auf, die als Seitenwangen einem Sitzbenutzer einen verbesserten Seitenhalt, insbesondere bei Kurvenfahrten bieten. Durch die Polstergeometrie unverändert vorgegebene Seitenwangen sind für den durchschnittlichen Körperbau von Sitzbenutzern optimiert, jedoch weicht eine Vielzahl von möglichen Sitzbenutzern in ihrer Gestalt von diesem durchschnittlichen Körperbau erheblich ab, so dass bei einem unveränderlich vorgegebenen Querschnittsprofil des Sitzes oder der Rückenlehne schmale Personen zu wenig Seitenhalt haben, während Personen mit breitem Körperbau dagegen nicht in den vorgegebenen Bereich zwischen den Seitenwangenkonturen passen, so dass sie teilweise auf den Seitenwangen sitzen bzw. sich an die Seitenwangen anlehnen, was zu einer unbequernen Sitzposition mit Druckstellen im Bereich der Seitenwangen führt.

Um diesen Zustand zu vermeiden, sind Kraftfahrzeugsitze mit verstellbaren Seitenwangen für das Sitzteil und/oder die Rückenlehne bekannt, die mittels einer Seitenwangen-Verstelleinrichtung von einer weiten zur Sitzaußenseite hin liegenden Position in eine schmale, zur Sitzmitte hin liegenden Position verstellbar sind.

Aus der DE 196 05 779 C2 ist ein derartiger Fahrzeugsitz mit verstellbaren Sitz- und Rückenlehnenwangen bekannt, bei dem mittels mechanischer Verstelleinrichtungen die Seitenwangen in Abhängigkeit eines von Drucksensoren ermittelten Anlagedruckes eines Sitzbenutzers bewegt werden. Zu diesem Zweck sind die Sitz- und Rückenlehnenwangen als Wangenpolsterteile schwenkbar um Achsen gehalten, die in Sitzlängsrichtung verlaufen, so dass die Sitz- und Rückenlehnenwangen mit Hilfe von elektrischen Stellmotoren von einer weiten Ausgangsposition zur Mitte hin in eine schmale Einstellposition verschwenkt werden können. Alternativ zur schwenkbaren Verstellung der Sitz- und Rückenlehnenwangen können die Sitz- und Rückenlehnenwangen zur Sitzmitte hin verschiebbar angeordnet werden, oder es ist eine Kombination aus Schwenk- und Verschiebeeinrichtungen wie eine Bewegung der Sitz- und Rückenlehnenwangen über Kulissenführungen möglich.

Die Verstelleinrichtung besteht bei dem bekannten Fahrzeugsitz aus einem Elektromotor, der über einen Spindelantrieb die beiden Sitzwangen gekoppelt zur Sitzmitte hin verstellt bis über den Drucksensor ein vorbestimmter Anlagedruck am Sitzbenutzer ermittelt wird. Bei Freigabe des Fahrzeugsitzes erfolgt durch eine Ansteuerung über einen Sitzbelegungsschalter wieder eine Rückführung in die weite Ausgangsposition.

Da sowohl bei einem Verschwenken oder linearen Verschieben der Seitenwangen zur Sitzmitte hin, als auch bei einer Kombination von Schwenken und Verschieben die Kontur bzw. das Querschnittsprofil der Seitenwangen unverändert bleibt und auch in der zurückgefahrenen Endstellung gegenüber dem mittleren Sitz- oder Rückenlehnenpolster eine erhebliche Wölbung aufweist, wird das Ein- und Aussteigen eines Passagiers durch die Seitenwangen erschwert.

Der vorliegenden Erfindung liegt die Aufgabenstellung zugrunde, eine ergonomisch günstige Verstellbewegung der Seitenwangen zu erzeugen, eine bessere Anpassung an unterschiedliche Anatomien von Sitzbenutzern zu erzielen und die Belegung und das Verlassen eines Kraftfahrzeugsitzes für einen Sitzbenutzer zu erleichtern.

Diese Aufgabe wird erfindungsgemäß durch die Merkmale des Anspruchs 1 gelöst.

Die erfindungsgemäße Lösung ermöglicht eine ergonomisch günstige Verstellbewegung der Seitenwangen, bessere Anpassung an unterschiedliche Anatomien von Sitzbenutzern und erleichtert dem Sitzbenutzer die Belegung und das Verlassen eines Kraftfahrzeugsitzes.

Durch eine kombinierte Verstellbewegung der Seitenwangen, bei der die Länge und Ausrichtung der Seitenwangen in Bezug auf die mittlere Sitz- und/oder Rückenlehnenfläche und gemäß einem weiterführenden Merkmal auch im Querschnittsprofil veränderbar ist, wird eine gesteuerte Bahnbewegung und Querschnittsprofiländerung erzeugt, die den Vorteil aufweist, dass beim Einsteigen bzw. Belegen des Kraftfahrzeugsitzes die Seitenwangen nur minimal vorgewölbt sind und damit den Einstieg erleichtern, anschließend zur optimalen Anpassung an die Anatomie des Sitzbenutzers zunächst eine Verstellbewegung in Sitzlängsrichtung, d.h. in X-Richtung des Kraftfahrzeugs ausführen und dann in Richtung der Sitzmitte, d.h. in Y-Richtung des Kraftfahrzeugs verschwenken und damit die Sitzbreite verkleinern. Dadurch wird erreicht, dass bei einem starken Körperbau des Sitzbenutzers die Seitenwangen in X-Richtung des Kraftfahrzeugs herausbewegt werden und keine oder eine nur geringe Schwenkbewegung ausführen, so dass keine Einengung des Sitzbenutzers erfolgt, während bei einem schmalen Körperbau des Sitzbenutzers die Seitenwangen in X-Richtung des Kraftfahrzeugs aus der Grundstellung herausbewegt werden und durch eine anschließende bzw. kombinierte Schwenkbewegung den Sitzbenutzer seitlich abstützen.

Dementsprechend werden in einer vorteilhaften Ausgestaltung der erfindungsgemäßen Lösung die Seitenwangen ausgehend von einer ersten Endstellung, in der sich die Seitenwangen in einem vollständig eingefahrenen Zustand befinden, zunächst überwiegend verlängert und anschließend überwiegend um einen sitz- oder lehnenfesten Drehpunkt verschwenkt bis sie sich in einer der ersten Endstellung entgegengesetzten Endstellung in einem vollständig ausgefahrenen Zustand befinden.

Vorzugsweise weist die Seitenwangen-Verstelleinrichtung eine kombinierte Linear- und Drehführung zur Erzeugung der gesteuerten Bahnbewegung auf und enthält einen das Seitenwangenpolster abstützenden Stützbügel, der mit einem die gesteuerte Bahnbewegung ausführenden Schwenk- und Schiebegelenk verbunden ist.

Zur Vorgabe der kombinierten Verstellbewegung der Seitenwangen ist das Schwenk- und Schiebegelenk mit einer Führungskulisse verbunden und wird in einer konkreten Ausführungsform dadurch gebildet, dass der Stützbügel um einen den sitz- oder rückenlehnenfesten Drehpunkt bildenden Schwenkbolzen verschwenkbar und mit einer Führungsstange gekoppelt ist, die entlang der Führungskulisse verschiebbar und mit einem Verstellantrieb verbunden ist, wobei die Führungskulisse derart in Bezug auf den Schwenkbolzen ausgerichtet ist, dass sie weder den Schwenkbolzen schneidet, noch geradlinig zum Schwenkbolzen verlängerbar ist.

In dieser Ausführungsform der erfindungsgemäßen Lösung wird die Verstellbewegung der Seitenwangen so gesteuert, dass mit einer Annäherung der Führungsstange an den lehnenfesten Drehpunkt bzw. den Schwenkbolzen die Schwenkbewegung der Seitenwangenverstellung verstärkt wird. Damit kann durch Ausrichtung der Führungskulisse die jeweils gewünschte Kinematik der Verstellung eingestellt werden.

Je nach gewünschten Bewegungsablauf bei der Seitenwangenverstellung kann die Führungskulisse gradlinig oder bogenförmig ausgebildet sein.

Der Verstellantrieb ist vorzugsweise frei gelagert und weist eine mit der Führungsstange verbundene Spindelmutter auf, in die eine über ein Schneckengetriebe mit einem Antriebsmotor verbundene Spindel eingreift. Alternativ kann der Verstellantrieb als Zahnstangenantrieb ausgebildet sein oder ein flexibles Zugmittel als Kraftübertragungselement zur Führungsstange aufweisen, das gegen die Wirkung einer die Seitenwangen-Verstelleinrichtung in die erste Endstellung zurückstellenden Rückstellfeder eine Verstellbewegung auslöst.

Durch den getrennten Antrieb beider Seitenwangenverstellungen des Sitzteils und/oder der Rückenlehne ist eine autarke Funktion der Seitenwangenverstellungen gewährleistet, so dass zusätzliche Verbindungselemente entfallen. Durch die Synchronisation beider Seitenwangenverstellungen des Sitz- und/oder Rückenlehnenteils in den Endanschlägen wird gewährleistet, dass bei Bedarf eine gleichförmige Seitenwangenverstellung erfolgt.

Anhand eines in der Zeichnung dargestellten Ausführungsbeispiels soll der der Erfindung zugrundeliegende Gedanke näher erläutert werden. Es zeigen:
- Fig. 1 bis 3 -: verschiedene perspektivische Ansichten einer Seitenwangen-Verstelleinrichtung in ihren beiden Endstellungen;
- Fig. 4 und 5 -: Seitenansichten der Seitenwangen-Verstelleinrichtung gemäß den Fig. 1 bis 3 in ihren beiden Endstellungen und
- Fig. 6 bis 10 -: schematische Schnittdarstellungen der verschiedenen Bewegungsphasen einer Seitenwangenverstellung mit der Verstelleinrichtung gemäß den Fig. 1 bis 5.

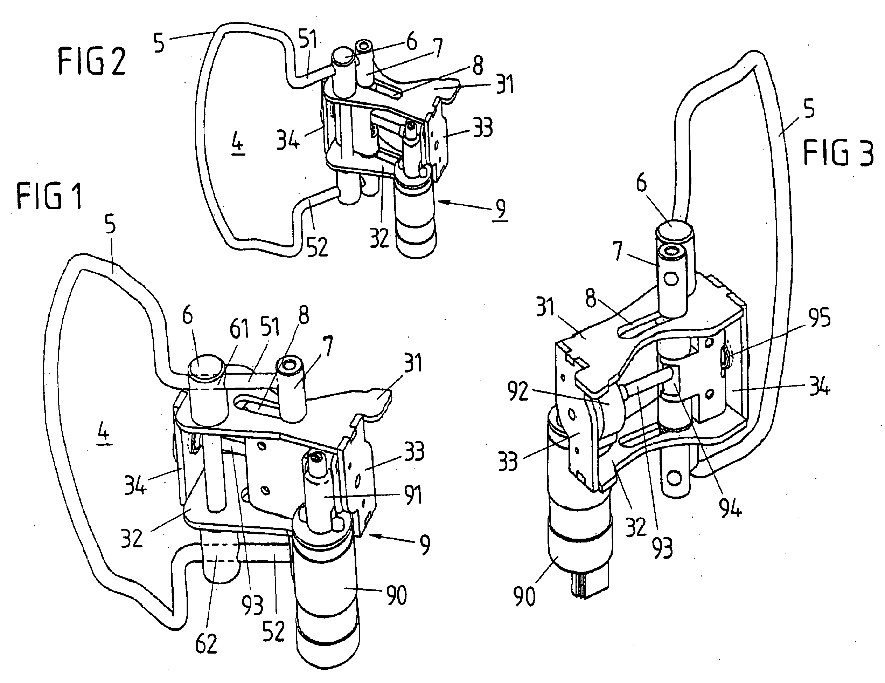

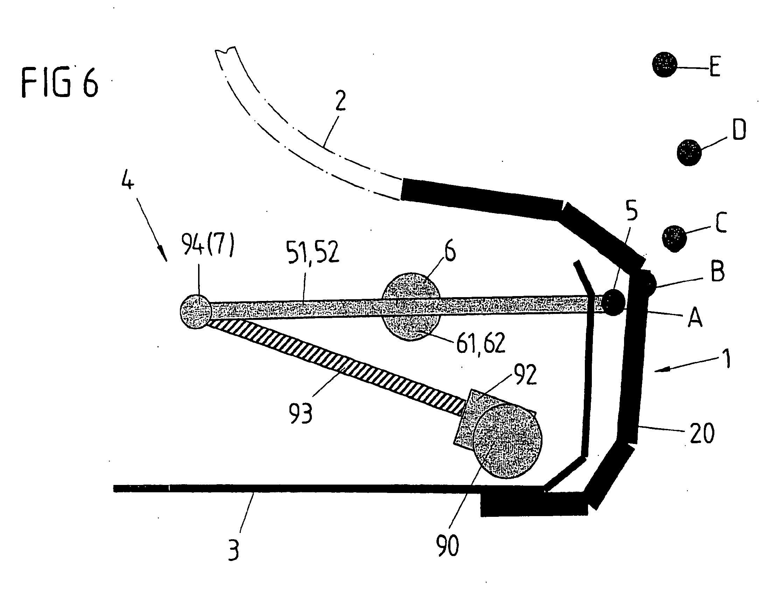

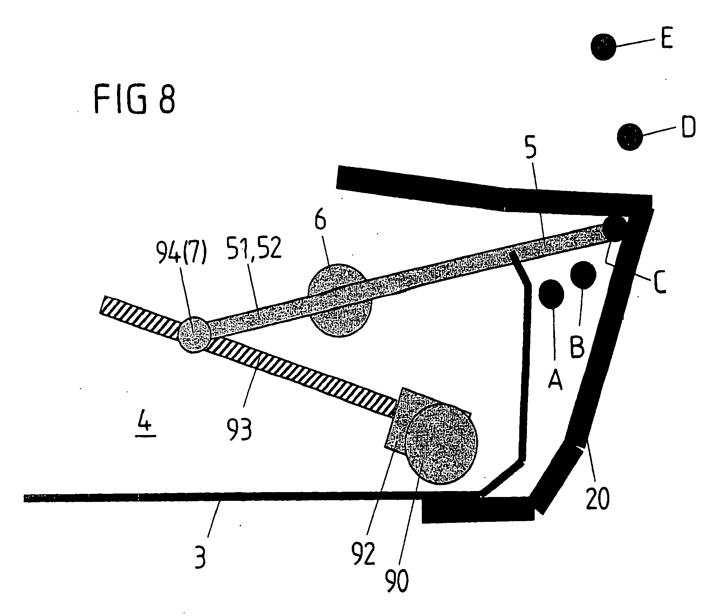

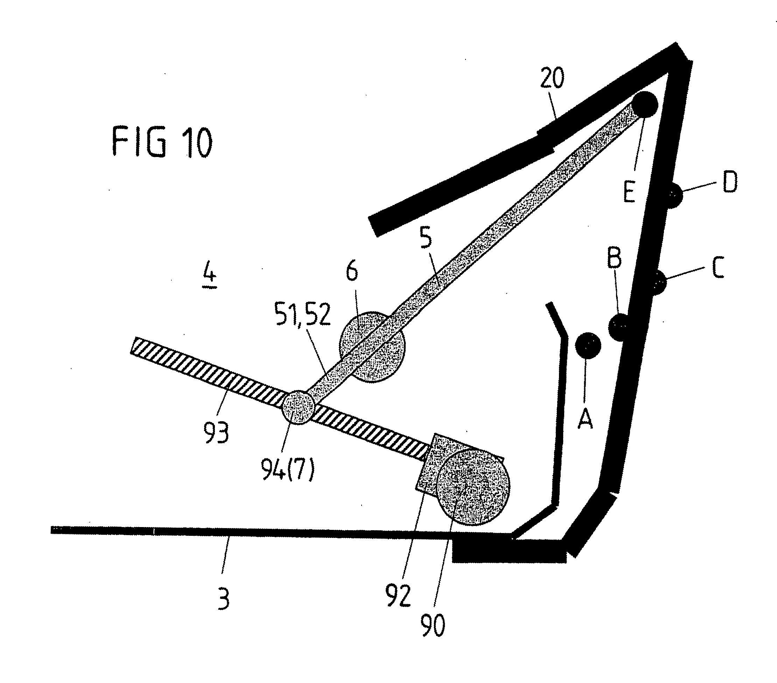

Die in den Fig. 1 bis 3 in verschiedenen perspektivischen Ansichten und in den beiden Endstellungen dargestellte Seitenwangen-Verstelleinrichtung 4 enthält einen Stützbügel 5, der gemäß den Figuren 6 bis 10 an der Innenseite eines Seitenwangenpolsters 20 einer Seitenwange 1 anliegt, an die sich das mittlere Sitz- oder Rückenlehnenpolster 2 eines Kraftfahrzeugsitzes anschließt. Der Stützbügel 5 weist parallel zueinander verlaufende Schubstangen 51, 52 auf, die durch Führungsbohrungen 61, 62 eines einen sitz- oder rückenlehnenfesten Drehpunkt bildenden Schwenkbolzens 6 gesteckt und innerhalb der Führungsbohrungen 61, 62 längsverschiebbar sind. Die Enden der Schubstangen 51, 52 sind mit einer Führungsstange 7 verbunden, die im Wesentlichen parallel zum Schwenkbolzen 6 verläuft und in einer Führungskulisse 8 gelagert ist.

Die als Ausnehmung in den Seitenplatten 31, 32 eines Gehäuses vorgesehenen Führungskulissen 8 sind in dem in den Fig. 1 bis 5 dargestellten Ausführungsbeispiel geradlinig ausgebildet und so ausgerichtet, dass der Schwenkbolzen 6 und damit der sitz- oder lehnenfeste Drehpunkt die Führungskulisse 8 weder schneidet noch in deren Verlängerung liegt. Da zwischen der Ausrichtung der Führungskulisse 8 und den Schubstangen 51, 52, die die Verbindung zwischen der Führungsstange 7 und dem Schwenkbolzen 6 herstellen, ein Winkel eingeschlossen wird, wird bei einer Verstellung der Führungsstange 7 eine Schwenk- und Schiebebewegung des Stützbügels 5 hervorgerufen, deren Verlauf nachstehend anhand der Fig. 6 bis 10 näher erläutert wird.

Als Verstellantrieb 9 dient in der in den Fig. 1 bis 5 dargestellten Ausführungsform einer Seitenwangen-Verstelleinrichtung 4 ein Spindelantrieb mit einem Antriebsmotor 90, einer mit der Motorwelle verbundenen Antriebsschnecke 91, die mit einem Schneckenrad 92 kämmt, das drehfest mit einer Spindel 93 verbunden ist. Die Spindel 93 greift in eine feststehende Spindelmutter 94 ein, die mit der Führungsstange 7 verbunden ist. Die Spindel 93 ist an einem Lager 95 einer die Seitenplatten 31, 32 verbindenden Lagerplatte 34 des Gehäuses 3 abgestützt. Eine Grundplatte 33 des Gehäuses dient zur Abstandshaltung der Seitenplatten 31, 32 sowie zur Stabilisierung des Gehäuses.

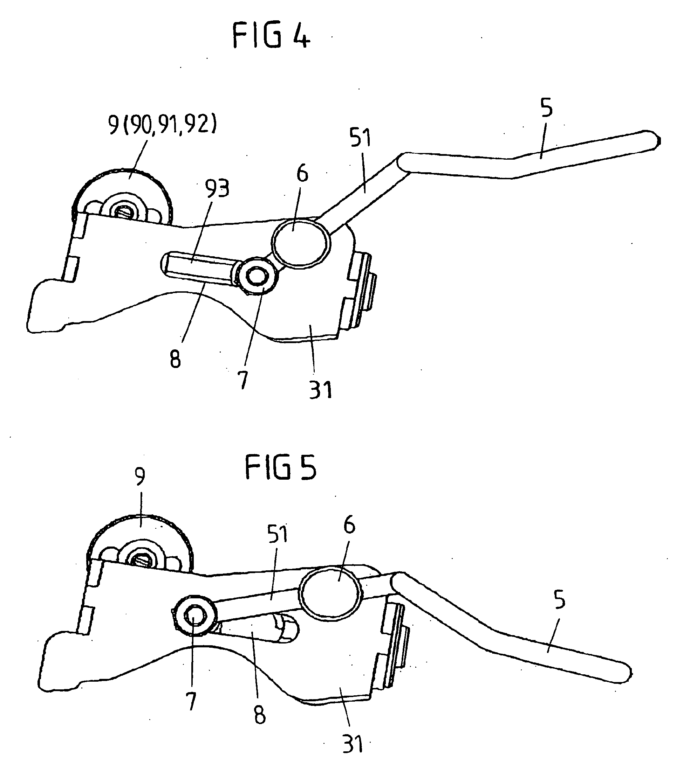

Fig. 1 zeigt in perspektivischer Darstellung und Fig. 5 in einer Seitenansicht die Seitenwangen-Verstelleinrichtung 4 in einer ersten Endstellung oder Ausgangsstellung der Seitenwangenverstellung, in der der Stützbügel 5 vollständig abgesenkt ist.

Fig. 2 zeigt in derselben perspektivischen Darstellung wie Fig. 1, Fig. 3 in einer perspektivischen Ansicht von der Gegenseite und Fig. 4 in einer Seitenansicht die Seitenwangen-Verstelleinrichtung 4 in der der ersten Endstellung entgegengesetzten Endstellung, in der der Stützbügel 5 vollständig angehoben, d.h. maximal verschwenkt und linear verstellt ist.

Die einzelnen Phasen der Verstellbewegung der Seitenwangen ausgehend von der in den Fig. 1 und 5 dargestellten ersten Endstellung bis zu der in den Fig. 2 bis 4 dargestellten entgegengesetzten Endstellung werden nachfolgend anhand der schematischen Querschnittsdarstellungen in den Fig. 6 bis 10 näher erläutert.

Zur Verdeutlichung der unterschiedlichen Realisierbarkeit der Verstellkinematik befindet sich bei den schematischen Seitenansichten der Fig. 6 bis 10 der Verstellantrieb 9 auf der Seite des Stützbügels 5 in Bezug auf den sitz- oder rückenlehnenfesten Drehpunkt in Form des Schwenkbolzens 6, so dass bei einer Verstellbewegung ausgehend von der ersten Endstellung mit vollständig abgesenktem Stützbügel 5 die Führungsstange 7 an den Verstellantrieb 9 herangeführt wird, während sie in den Darstellungen gemäß den Fig. 1 bis 5 bei kombinierter Schwenk- und Schiebebewegung von der ersten Endstellung in die entgegengesetzte Endstellung vom Verstellantrieb 9 wegbewegt wird.

Fig. 6 zeigt die Seitenwangen-Verstelleinrichtung 4 in der in den Fig. 1 und 5 dargestellten ersten Endstellung, bei der sich der Querriegel des Stützbügels 5 in der vollständig abgesenkten Position A befindet.

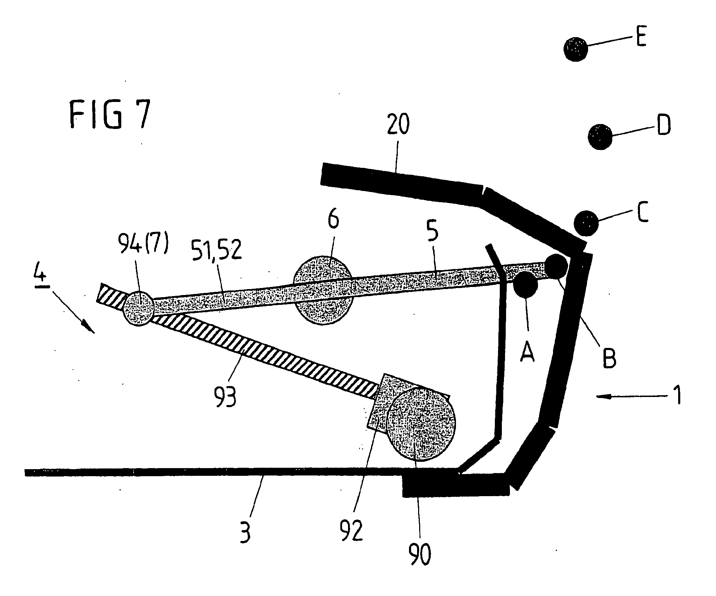

Zum besseren Verständnis der Verstellkinematik sind in Fig. 6 und den nachfolgenden Fig. 7 bis 10 die in den einzelnen Verstellphasen der Seitenwangen-Verstelleinrichtung 4 vom Stützbügel 5 eingenommenen Positionen A, B, C, D und E eingetragen.

Die Seitenwangen-Verstelleinrichtung 4 ist innerhalb eines Sitz- oder Rückenlehnenrahmens 3 angeordnet und zeigt die Ausrichtung der in den Führungsbohrungen 21, 22 des Schwenkbolzens 6 geführten Schubstangen 51, 52 in der am weitesten entfernten Stellung der Spindelmutter 94 bzw. der die Schubstangen 51, 52 aufnehmenden Führungsstange 7 von dem Schneckenrad 92 bzw. dem Antriebsmotor 90. Durch Drehung der Spindel 93 wird infolge der feststehenden Spindelmutter 94 die Führungsstange 7 in Richtung auf die Antriebsvorrichtung 9 bewegt, so dass infolge des durch den Schwenkbolzen 6 gegebenen sitz- oder rückenlehnenfesten Drehpunktes die Schubstangen 51, 52 in Richtung auf den Schwenkbolzen 6 verschoben und dementsprechend der Stützbügel 5 im Wesentlichen linear verschoben wird.

Durch das Heranführen der Führungsstange 7 an den Schwenkbolzen 6 bei einer Drehung der Spindel 93 wird somit der Stützbügel 5 entsprechend Fig. 7 in die Position B bewegt, wobei diese erste Phase der Bewegung überwiegend aus einer linearen Bewegung besteht, da die vorangegangene erste Endstellung oder Ausgangsposition A im Wesentlichen noch mit der Ausrichtung des Stützbügels 5 übereinstimmt.

Bei weiterer Drehung der Spindel 93 und damit Annäherung der Führungsstange 7 an den Schwenkbolzen 5 wird die Schubstange 51, 52 weiter in Richtung des Schwenkbolzens 6 verschoben, infolge der weiteren Annäherung der Führungsstange 7 an den Schwenkbolzen 6 aber auch gleichzeitig eine verstärkte Schwenkbewegung durchgeführt, bei der der Stützbügel 5 die Position C erreicht. Ein Vergleich der Position C mit den vorangegangenen Positionen A und B zeigt die gegenüber einer Linearverstellung stärkere Schwenkbewegung des Stützbügels 5.

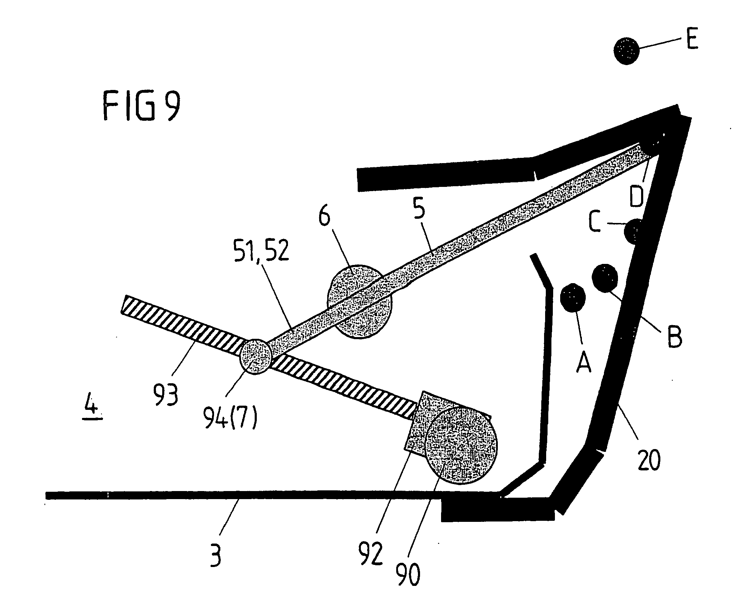

Nähert sich die Führungsstange 7 bei weiterer Drehung der Spindel 93 dem Schwenkbolzen 5, so verstärkt sich die Schwenkbewegung des Stützbügels 5 gegenüber der Linearverstellung der Schubstangen 51, 52, so dass das Seitenwangenpolster 20 der Seitenwange 1 verstärkt zur Sitzmitte hin bewegt wird. Ein Vergleich der in Fig. 9 schematisch dargestellten Ausrichtung des Stützbügels 5, bei der er die Position D erreicht hat, mit der vorangegangenen Position C verdeutlicht die nochmals verstärkte Schwenkbewegung.

Schließlich erreicht bei weiterer Drehung der Spindel 93 der Stützbügel 5 die der ersten Endstellung A entgegengesetzte Endstellung E und damit die dichteste Annäherung der Führungsstange 7 an den Schwenkbolzen 6, wobei der Abstand zwischen den einzelnen Positionen A, B, C, D, E jeweils die gegenüber einer Linearbewegung verstärkte Schwenkbewegung der Seitenwangen-Verstelleinrichtung 4 verdeutlicht.

Obwohl bei den in der Zeichnung dargestellten und vorstehend beschriebenen Ausführungsbeispielen die Seitenwangen-Verstelleinrichtung 4 mit einem Spindelantrieb 9 als Verstellantrieb betrieben wird, sind auch andere Verstellantriebe wie beispielsweise Zahnstangen- oder Seilantriebe grundsätzlich einsetzbar. Bei Verwendung eines Seilantriebes muss in an sich bekannter Weise wegen der nur einseitigen Kraftübertragung eine zusätzliche Rückstellfeder oder Umlenkung vorgesehen werden.

Auch beschränkt sich die Realisierung der Seitenwangen-Verstelleinrichtung nicht auf eine geradlinige Kulissenführung 8, sondern kann auch durch eine bogenförmige Kulissenführung mit stetigem Verlauf oder unstetig beispielsweise in Form einzelner geradliniger, winkelig zueinander stehender Abschnitte realisiert werden.

### Bezugszeichenliste

- 1: Seitenwange
- 2: mittleres Sitz- oder Rückenlehnenpolster
- 4: Seitenwangen-Verstelleinrichtung
- 5: Stützbügel
- 6: Schwenkbolzen
- 7: Führungsstange
- 8: Führungskulisse
- 9: Verstellantrieb
- 20: Seitenwangenpolster
- 31, 32: Seitenplatten eines Gehäuses
- 33: Grundplatte
- 34: Lagerplatte des Gehäuses
- 51, 52: Schubstangen
- 61, 62: Führungsbohrungen
- 90: Antriebsmotor
- 91: Antriebsschnecke
- 92: Schneckenrad
- 93: Spindel
- 94: Spindelmutter
- 95: Lager
- A - E: Positionen des Stützbügels der Seitenwangen-Verstelleinrichtung

## Patentansprüche

1. Kraftfahrzeugsitz mit verstellbaren Seitenwangen (1) am Sitzteil und/oder an der Rückenlehne,
**gekennzeichnet durch**
eine kombinierte Verstellung der Seitenwangen (1), bei der die Länge und Ausrichtung der Seitenwangen (1) in Bezug auf die mittlere Sitzfläche und/oder Rückenlehnenfläche (2) veränderbar ist, wobei die Verstellung der Seitenwangen (1) mittels einer Seitenwangen-Verstelleinrichtung (4) erfolgt, die einen das Seitenwangenpolster (20) abstützenden Stützbügel (5) aufweist, der um einen den sitz- oder rückenlehnenfesten Drehpunkt bildenden Schwenkbolzen (6) verschwenkbar und mit einer Führungsstange (7) gekoppelt ist, die entlang einer Führungskulisse (8) verschiebbar und mit einem Verstellantrieb (9) verbunden ist.

2. Kraftfahrzeugsitz nach Anspruch 1, **dadurch gekennzeichnet, dass** das Querschnittsprofil der Seitenwangen (1) verstellbar ist.

3. Kraftfahrzeugsitz nach Anspruch 1 oder 2, **dadurch gekennzeichnet, dass** die Seitenwangen (1) ausgehend von einer ersten Endstellung (A), in der sich die Seitenwangen (1) in einem vollständig eingefahrenen Zustand befinden, zunächst überwiegend verlängert und anschließend überwiegend um den sitz- oder lehnenfesten Drehpunkt verschwenkt werden bis sie sich in einer der ersten Endstellung (A) entgegengesetzten Endstellung (E) in einem vollständig ausgefahrenen Zustand befinden.

4. Kraftfahrzeugsitz nach mindestens einem der voranstehenden Ansprüche, **dadurch gekennzeichnet, dass** durch die Seitenwangen-Verstelleinrichtung (4) mit einer kombinierten Linear- und Drehführung (6, 7, 8) eine gesteuerte Bahnbewegung erzeugt wird.

5. Kraftfahrzeugsitz nach Anspruch 4, **dadurch gekennzeichnet, dass** der Stützbügel (5) mit einem die gesteuerte Bahnbewegung ausführenden Schwenk- und Schiebegelenk (6, 7, 8) verbunden ist.

6. Kraftfahrzeugsitz nach Anspruch 5, **dadurch gekennzeichnet, dass** das Schwenk- und Schiebegelenk (6, 7, 8) die Führungskulisse (8) enthält, deren Form, Länge und Ausrichtung gegenüber dem sitz- oder rückenlehnenfesten Drehpunkt (6) die Verstellbewegung der Seitenwangen (1) bestimmt.

7. Kraftfahrzeugsitz nach Anspruch 5 oder 6, **dadurch gekennzeichnet, dass** die Führungskulisse (8) derart in Bezug auf den Schwenkbolzen (6) ausgerichtet ist, dass sie weder den Schwenkbolzen (6) schneidet, noch geradlinig zum Schwenkbolzen (6) verlängerbar ist.

8. Kraftfahrzeugsitz nach einem der voranstehenden Ansprüche, **dadurch gekennzeichnet, dass** die Führungskulisse (8) geradlinig ausgebildet ist.

9. Kraftfahrzeugsitz nach einem der voranstehenden Ansprüche, **dadurch gekennzeichnet, dass** die Führungskulisse (8) bogenförmig ausgebildet ist.

10. Kraftfahrzeugsitz nach mindestens einem der voranstehenden Ansprüche, **dadurch gekennzeichnet, dass** die Enden von durch Führungsbohrungen (61, 62) im Schwenkbolzen (6) gesteckten Schubstangen (51, 52) des Stützbügels (5) mit der in der Führungskulisse (8) geführten Führungsstange (7) verbunden sind.

11. Kraftfahrzeugsitz nach mindestens einem der voranstehenden Ansprüche, **dadurch gekennzeichnet, dass** der Verstellantrieb (9) frei gelagert ist.

12. Kraftfahrzeugsitz nach mindestens einem der voranstehenden Ansprüche, **dadurch gekennzeichnet, dass** der Verstellantrieb (9) eine mit der Führungsstange (7) verbundene Spindelmutter (94) aufweist, in die eine über ein Schneckengetriebe (91, 92) mit einem Antriebsmotor (90) verbundene Spindel (93) eingreift.

13. Kraftfahrzeugsitz nach mindestens einem der voranstehenden Ansprüche, **dadurch gekennzeichnet, dass** der Schwenkbolzen (6) durch die miteinander fluchtenden Bohrungen von zwei zueinander beabstandeten Gehäuseplatten (31, 32) gesteckt ist, in denen die als Aussparung ausgebildete Führungskulisse (8) angeordnet sind.

14. Kraftfahrzeugsitz nach mindestens einem der voranstehenden Ansprüche, **dadurch gekennzeichnet, dass** der Verstellantrieb (9) als Zahnstangenantrieb ausgebildet ist.

15. Kraftfahrzeugsitz nach mindestens einem der voranstehenden Ansprüche, **dadurch gekennzeichnet, dass** der Verstellantrieb (9) ein flexibles Zugmittel als Kraftübertragungselement zur Führungsstange (7) aufweist, das gegen die Wirkung einer die Seitenwangen-Verstelleinrichtung (4) in die erste Endstellung (A) zurückstellende Rückstellfeder eine Verstellbewegung auslöst.

16. Kraftfahrzeugsitz nach mindestens einem der voranstehenden Ansprüche, **dadurch gekennzeichnet, dass** die Sitzwangen-Verstelleinrichtungen (4) beider Seitenwangen (1) des Sitzteils und/oder der Rückenlehne getrennt voneinander angetrieben sind.

17. Kraftfahrzeugsitz nach mindestens einem der voranstehenden Ansprüche, **dadurch gekennzeichnet, dass** die Antriebsmotoren (90) der Seitenwangen-Verstelleinrichtungen (4) in den Endanschlägen der Seitenwangen (1) synchronisierbar sind.

## Claims

1. A motor vehicle seat comprising adjustable lateral cheeks on the seat part and/or on the backrest,
**characterized by**
a combined adjustment of the lateral cheeks (1), in which the length and orientation of the lateral cheeks (1) in relation to the central seat surface and/or backrest surface (2) can be changed, the adjustment of lateral cheeks (1) being carried out by means of a lateral cheek adjusting device (4) having a supporting bow (5) which supports the lateral cheek cushion (20) and which can be pivoted about a pivoting bolt (6), forming the pivot point fixed on the seat or backrest, and is coupled to a guide rod (7), which guide rod can be displaced along a guide slot (8) and is connected to an adjusting drive (9).

2. The motor vehicle seat as claimed in claim 1, **characterized in that** the cross-sectional profile of the lateral cheeks (1) can be adjusted.

3. The motor vehicle seat as claimed in claim 1 or 2, **characterized in that** starting from a first end position (A) in which the lateral cheeks (1) are in a completely retracted state, the lateral cheeks (1) are first of all predominantly extended and subsequently are predominantly pivoted about the pivot point fixed on the seat or backrest until they are in a completely extended state in an end position (E) opposite the first end position (A).

4. The motor vehicle seat as claimed in at least one of the preceding claims, **characterized in that** a controlled path movement is produced by the lateral cheek adjusting device (4) with a combined linear and rotational guide (6, 7, 8).

5. The motor vehicle seat as claimed in claim 4, **characterized in that** the supporting bow (5) is connected to a pivoting and sliding joint (6, 7, 8) carrying out the controlled path movement.

6. The motor vehicle seat as claimed in claim 5, **characterized in that** the pivoting and sliding joint (6, 7, 8) contains the guide slot (8), the shape, length and orientation of which in relation to the pivot point (6) fixed on the seat or backrest determines the adjusting movement of the lateral cheeks (1).

7. The motor vehicle seat as claimed in claim 5 or 6, **characterized in that** the guide slot (8) is oriented in relation to the pivoting bolt (6) in such a manner that it neither intersects the pivoting bolt (6) nor can be extended rectilinearly with respect to the pivoting bolt (6).

8. The motor vehicle seat as claimed in one of the preceding claims, **characterized in that** the guide slot (8) is of rectilinear design.

9. The motor vehicle seat as claimed in one of the preceding claims, **characterized in that** the guide slot (8) is of curved design.

10. The motor vehicle seat as claimed in at least one of the preceding claims, **characterized in that** the ends of push rods (51, 52) of the supporting bow (5), which push rods are inserted through guide holes (61, 62) in the pivoting bolt (6), are connected to the guide rod (7), which is guided in the guide slot (8).

11. The motor vehicle seat as claimed in at least one of the preceding claims, **characterized in that** the adjusting drive (9) is mounted freely.

12. The motor vehicle seat as claimed in at least one of the preceding claims, **characterized in that** the adjusting drive (9) has a spindle nut (94) which is connected to the guide rod (7) and in which a spindle (93), which is connected via a worm mechanism (91, 92) to a driving motor (90), engages.

13. The motor vehicle seat as claimed in at least one of the preceding claims, **characterized in that** the pivoting bolt (6) is inserted through mutually aligned holes of two spaced-apart housing plates (31, 32) in which the guide slot (8), which is designed as a cutout, is arranged.

14. The motor vehicle seat as claimed in at least one of the preceding claims, **characterized in that** the adjusting drive (9) is designed as a rack drive.

15. The motor vehicle seat as claimed in at least one of the preceding claims, **characterized in that** the adjusting drive (9) has a flexible traction means as force transmission element to the guide rod (7), which triggers an adjusting movement counter to the action of a resetting spring, which resets the lateral cheek adjusting device (4) into the first end position (A).

16. The motor vehicle seat as claimed in at least one of the preceding claims, **characterized in that** the lateral cheek adjusting devices (4) of both lateral cheeks (1) of the seat part and/or of the backrest are driven separately from each other.

17. The motor vehicle seat as claimed in at least one of the preceding claims, **characterized in that** the driving motors (90) of the lateral cheek adjusting devices (4) can be synchronized in the end stops of the lateral cheeks (1).

## Revendications

1. Siège de véhicule à parties latérales réglables (1) sur l'assise et/ou le dossier,
**caractérisé par**
un réglage combiné des parties latérales (1), dans lequel la longueur et l'orientation des parties latérales (1) sont réglables par rapport à la surface médiane de l'assise et/ou la surface médiane du dossier (2), le réglage des parties latérales (1) étant effectué au moyen d'un dispositif de réglage (4) des parties latérales, comportant une bride d'appui (5) soutenant le coussin de partie latérale (20) et pouvant pivoter autour d'un boulon de pivotement (6) formant le point de rotation solidaire de l'assise ou du dossier, tout en étant accouplée à une tige de guidage (7) déplaçable le long d'une coulisse de guidage (8) et reliée à un entraînement de réglage (9).

2. Siège de véhicule selon la revendication 1, **caractérisé en ce que** le profil de la section transversale des parties latérales (1) est réglable.

3. Siège de véhicule selon la revendication 1 ou 2, **caractérisé en ce que** les parties latérales (1) sont tout d'abord essentiellement rallongées à partir d'une première position finale (A), dans laquelle les parties latérales (1) se trouvent dans un état entièrement rentré, puis essentiellement pivotées autour du point de rotation solidaire de l'assise ou du dossier, jusqu'à se trouver dans une position finale (E) opposée à la première position finale (A), dans un état entièrement sorti.

4. Siège de véhicule selon au moins l'une des revendications précédentes, **caractérisé en ce que** le dispositif de réglage (4) des parties latérales permet de produire un déplacement commandé, avec un guidage linéaire et rotatif combiné (6, 7, 8).

5. Siège de véhicule selon la revendication 4, **caractérisé en ce que** la bride d'appui (5) est reliée à une articulation de pivotement et de coulissement (6, 7, 8) exécutant le mouvement commandé.

6. Siège de véhicule selon la revendication 5, **caractérisé en ce que** l'articulation de pivotement et de coulissement (6, 7, 8) comprend la coulisse de guidage (8), dont la forme, la longueur et l'orientation par rapport au point de rotation (6) solidaire de l'assise ou du dossier déterminent le mouvement de réglage des parties latérales (1).

7. Siège de véhicule selon la revendication 5 ou 6, **caractérisé en ce que** la coulisse de guidage (8) est orientée de telle manière par rapport au boulon de pivotement (6), qu'elle ne croise pas le boulon de pivotement (6) et qu'elle ne peut pas être rallongée de façon rectiligne par rapport au boulon de pivotement (6).

8. Siège de véhicule selon l'une des revendications précédentes, **caractérisé en ce que** la coulisse de guidage (8) est conçue de façon rectiligne.

9. Siège de véhicule selon l'une des revendications précédentes, **caractérisé en ce que** la coulisse de guidage (8) est conçue en forme d'arc.

10. Siège de véhicule selon au moins l'une des revendications précédentes, **caractérisé en ce que** les extrémités de barres de poussée (51, 52) de la bride d'appui (5), enfoncées dans le boulon de pivotement (6) à travers des perçages de guidage (61, 62), sont reliées à la tige de guidage (7) guidée dans la coulisse de guidage (8).

11. Siège de véhicule selon au moins l'une des revendications précédentes, **caractérisé en ce que** l'entraînement de réglage (9) est disposé librement.

12. Siège de véhicule selon au moins l'une des revendications précédentes, **caractérisé en ce que** l'entraînement de réglage (9) comporte un écrou de vis (94) relié à la tige de guidage (7), dans lequel s'engage une vis (93) reliée à un moteur d'entraînement (90) par un engrenage à vis sans fin (91, 92).

13. Siège de véhicule selon au moins l'une des revendications précédentes, **caractérisé en ce que** le boulon de pivotement (6) est enfoncé dans les deux perçages alignés de deux plaques de boîtier (31, 32) espacées entre elles, dans lesquelles est formée la coulisse de guidage (8) conçue comme un évidement.

14. Siège de véhicule selon au moins l'une des revendications précédentes, **caractérisé en ce que** l'entraînement de réglage (9) est conçu comme un entraînement à crémaillère.

15. Siège de véhicule selon au moins l'une des revendications précédentes, **caractérisé en ce que** l'entraînement de réglage (9) comporte un moyen de traction souple comme élément de transmission de force à la tige de guidage (7), permettant de déclencher un mouvement de réglage, contre l'action d'un ressort de rappel ramenant le dispositif de réglage (4) des parties latérales dans la première position finale (A).

16. Siège de véhicule selon au moins l'une des revendications précédentes, **caractérisé en ce que** les dispositifs de réglage (4) des deux parties latérales (1) de l'assise et/ou du dossier sont entraînés indépendamment l'un de l'autre.

17. Siège de véhicule selon au moins l'une des revendications précédentes, **caractérisé en ce que** les moteurs d'entraînement (90) des dispositifs de réglage (4) des parties latérales peuvent être synchronisés dans les butées de fin de course des parties latérales (1).
